(19) Europäisches Patentamt
European Patent Office
Office européen des brevets

(11) Publication number: **0 216 957 A1**

(12) **EUROPEAN PATENT APPLICATION**

(21) Application number: 85201519.7

(51) Int. Cl.4: G03C 5/54 , C09B 29/045

(22) Date of filing: 23.09.85

(43) Date of publication of application: 08.04.87 Bulletin 87/15

(84) Designated Contracting States: AT BE CH DE FR GB IT LI LU NL SE

(71) Applicant: AGFA-GEVAERT naamloze vennootschap
Septestraat 27
B-2510 Mortsel(BE)

(72) Inventor: Van de Sande, Christian Charles
Tuinlaan 95
B-9180 Belsele(BE)
Inventor: Callant, Paul Remi
Drie Eikenstraat 280 bus 3
B-2520 Edegem(BE)
Inventor: Van den Bergh, Armand Maria
Sterrenlaan 131
B-2610 Wilrijk(BE)

(54) **Cyan dye-releasing compounds for use in the production of diffusion transfer colour images.**

(57) In a dye diffusion transfer process the use of a photosentive element incorporating in operative association with at least one alkali-permeable silver halide hydrophilic colloid emulsion layer at least one redox-controlled dye-releasing compound in ballasted non-diffusing state that can split off selectively image-wise a diffusible cyan azo-thiazole dye in function of development of said silver halide emulsion layer.

EP 0 216 957 A1

# CYAN DYE-RELEASING COMPOUNDS FOR USE IN THE PRODUCTION OF DIFFUSION TRANSFER COLOUR IMAGES

The present invention relates to a photographic silver halide emulsion material incorporating cyan dye-releasing compounds for the production of dye diffusion transfer images.

Dye diffusion transfer imaging can be carried out in a number of ways but all dye diffusion transfer imaging systems are based on the same principle of modifying the solubility of the dyes as a function of the amount of photographic silver halide developed.

In commonly known dye diffusion transfer processes the dye-image-producing compounds are either initially mobile in alkaline aqueous media and become immobilized during processing, or initially immobile and become mobilized during processing.

A survey of such processes has been given by Christian C. Van de Sande in Angew.Chem.-Int.Ed.Engl. 22 (1983) n° 3, 191-209.

Four important categories of dye-release processes are based on the following reactions respectively:

(A) a redox-reaction controlling a solubility change;

(B) an oxidative chromogenic coupling reaction;

(C) a redox-controlled cleavage reaction;

(D) an argentolytic cleavage reaction of a dye-releasing compound with silver ions.

A dye-developer system based on redox-controlled solubility change (ref. e.g. US-P 2 983 606) was the first commercially introduced dye diffusion transfer system.

Later on redox-controlled dye-releasing compounds were introduced in commercial systems.

Oxidizable dye-releasing compounds that after oxidation release a dye moiety by hydrolysis are known, e.g., from DE-A 2, 242,762, DE-A 2,406,664, DE-A 2,505,246, DE-A 2,613,005, DE-A 2, 645,656 and Research Disclosure publications Nos. 15,157 (November 1976), 16,654 (April 1977) and 17,736 (January 1979). In these references dye-releasing compounds are described in which the dye moiety is linked most frequently to an oxidizable carrier moiety through a sulphonamido group. The dye released from such compounds thus contains a sulphamoyl group.

Oxidizable dye-releasing compounds that in oxidized form release a dye moiety by intramolecular displacement reaction are described, e.g., in US-P 3,443,940. The dye released from these compounds contains a sulphinate group.

It is particularly interesting in dye diffusion transfer to operate with dye-releasing compounds, the dye release of which is inversely proportional to the development of a negative-working silver halide emulsion layer so that positive dye images can be formed in an image-receiving layer.

Oxidizable dye-releasing compounds that in oxidized form are stable but in reduced state set free a dye moiety by an elimination reaction are described in DE-A 2,823,159 and DE-A 2, 854,946. Compounds of this type can be used in reduced form in an unexposed silver halide emulsion material and can be called IHO-compounds, IHO being an acronym for "Inhibited Hydrolysis by Oxidation".

Reducible dye-releasing compounds that in reduced form and by hydrolysis set free a dye moiety can be called IHR-compounds, IHR standing for "Increased Hydrolysis by Reduction".

Reducible quinonoid IHR-compounds, that in reduced form can undergo a dye release by means of an intramolecular nucleophilic displacement reaction, are described in DE-A 2,809, 716 wherein these compounds are called BEND-compounds, BEND standing for "Ballasted Electron-accepting Nucleophilic Displacement".

Reducible IHR-compounds, which in reduced form can undergo a dye release by means of an elimination reaction are described in published EP-A 0,004,399 and in US-P 4,371,604.

Other classes of compounds that release a dye in reduced state are described in DE-A 3,008,588 and DE-A 3,014,669.

Particularly useful dye-releasing compounds are the redox-controlled dye-releasing compounds, which can be represented by:

BALL-REDOX-DYE

wherein :

BALL represents a carrier moiety with ballast residue for immobilizing the dye-releasing compound in a hydrophilic colloid layer,

REDOX represents a redox-active group, i.e. a group that under the circumstances of alkaline silver halide development is oxidizable or reducible and depending on the oxidized or reduced state brings about a dye release by an elimination reaction, nucleophilic displacement reaction, hydrolysis, or cleavage reaction,

DYE represents a diffusible dye moiety or a precursor thereof.

Redox-controlled cyan dye-releasing compounds used in the red-sensitive silver halide layer of a photosensitive element in dye diffusion transfer imaging systems have a high intrinsic absorption in the red region of the visible spectrum. Preferably they have an absorption maximum ( max) above 600 nm or have such absorption maximum when complexed with metal ions, e.g. nickel ions as described e.g. in published German Patent Application 3329774.4.

It is an object of the present invention to provide a photosensitive silver halide element incorporating redox-controlled cyan dye-releasing compounds which during alkaline silver halide development are capable of selectively releasing cyan dyes having a high stability to oxidation, and of which the stability to heat, light, and moisture is very good.

It is a further object of the present invention to provide a process for the production of diffusion transfer colour images by means of photosensitive elements incorporating said cyan dye-releasing compounds.

In accordance with the present invention a photosensitive element is provided incorporating in operative association with at least one alkali-permeable silver halide hydrophilic colloid emulsion layer at least one redox-controlled dye-releasing compound in ballasted non-diffusing state that can split off image-wise a diffusible cyan azo-thiazole dye in function of development of said silver halide emulsion layer and subjection of the ballasted compound to a redox redox reaction, characterized in that said dye-releasing compound corresponds to the following general formula (I):

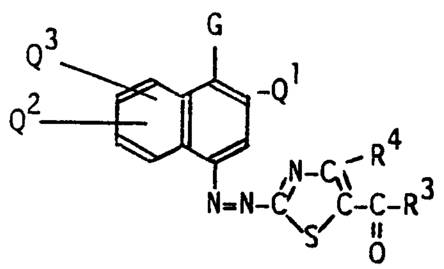

(I)

wherein :

$Q^1$ represents hydrogen, halogen, -COOH, or $-SO_3H$ or a salt of either of these acid groups, or is $-SO_2NR^1R^2$, $-SO_2R^1$, $-COR^1$, $-COOR^1$ or $-CONR^1R^2$, wherein each of $R^1$ and $R^2$ (which if present together may be the same or different) represents hydrogen, an alkyl group, a substituted alkyl group, an aryl group, a substituted aryl group or a heterocyclic group or $R^1$ and $R^2$ together represent the necessary atoms to complete a carbocyclic or heterocyclic ring,

$Q^2$ is positioned at the 5-or 8-position with respect to G and is -OH, $-NHCOR^1$, $-NHSO_2R^1$, $-NHCONR^1R^2$ or $-NHSO_2NR^1R^2$, wherein each of $R^1$ and $R^2$ (the same or different) have the meanings listed for the same symbols in the definition of $Q^1$,

G represents -OH, -O-acyl, $-NHSO_2R^1$ or $-NR^1R^2$, wherein $R^1$ and $R^2$ have the meanings listed for the same symbols in the definition of $Q^1$ or G and $Q^2$ together represent the necessary atoms to form a naphthsultam ring (so that $-Q^2$-G-represents $-SO_2NH$-in case $Q^2$ is positioned at the 5-position),

$Q^3$ represents hydrogen, $-SO_3H$, $-SO_2R^1$ or $-SO_2NR^1R^2$, wherein $R^1$ and $R^2$ have the meanings listed for the same symbols in the definition of $Q^1$,

$R^3$ represents hydrogen, $-NR^1R^2$, $-OR^2$, an alkyl group, a substituted alkyl group, an aryl group, e.g. phenyl, a substituted aryl group, e.g. substituted phenyl or a heterocyclic group or $R^3$ and $R^4$ together represent the necessary atoms to complete a carbocyclic or heterocyclic ring,

$R^4$ represents hydrogen, an alkyl group, a substituted alkyl group, an aryl group, e.g. phenyl, a substituted aryl group, e.g. substituted phenyl or a heterocyclic group,

with the proviso that: at least one of the groups $R^3$, $R^4$, $Q^1$, $Q^2$ and $Q^3$ contains a redox cleavable CAR-$G^1$-group, wherein CAR-is a carrier group containing a ballast group thereby rendering the redox controlled dye releasing compound resistant to diffusion in a hydrophilic colloid medium under wet alkaline conditions and $G^1$-represents a group which releases together with the dye moiety in the redox controlled cleavage reaction.

In certain preferred photosensitive elements according to the present invention, there is at least one redox cleavable CAR-$G^1$-group wherein $G^1$ represents a group which is linked to the dye moiety and corresponds to the following formula:

$-(A_1)_q-(B)_r-(A_2)_s-$

wherein :

each of q, r and s is 1 or zero with the proviso that not more than two of them are zero;

each of $A_1$ and $A_2$ (the same or different) is a single bond or a bivalent atom (e.g. -O-, -S-) or a bivalent atom group, e.g. $-SO_2-$, -CO-, $-CONR^4-$, $-SO_2NR^4-$, $-NR^4CO-$, $-NR^4SO_2-$, $-NR^4-$, a -phenylene-group, a $-NR^4CO$-phenylene-group, a $-NR^4SO_2$-phenylene-group, a -phenylene-CO-$NR^4$-group or a -phenylene-$SO_2$-$NR^4$-group, the term "phenylene" used in these expressions representing phenylene with or without further substitution and $R^4$ having the meanings listed for the same symbol as it appears in formula (I), and

B represents a single bond, an unsubstituted or substituted alkylene group or an unsubstituted or substituted arylene group.

Specific groups that can serve as $A_1$, $A_2$ and B groups are listed hereinafter by way of example :

(a) 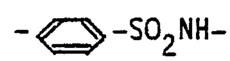

(b) 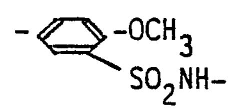

(c) 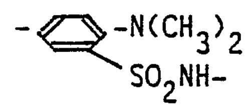

(d) 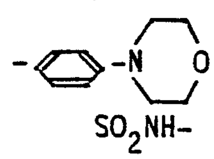

(e) 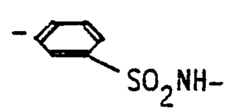

(CAR-$G^1$-) moieties wherefrom in oxidized form by a non-chromogenic reaction in alkaline medium a dye moiety can be split off may be selected e.g. from the following groups including these groups in further substituted form :

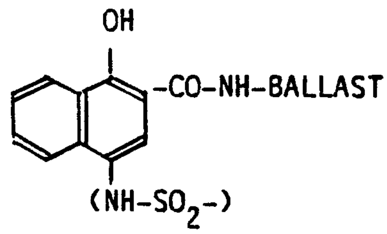

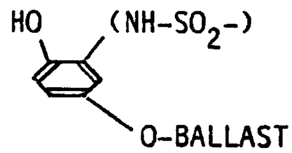

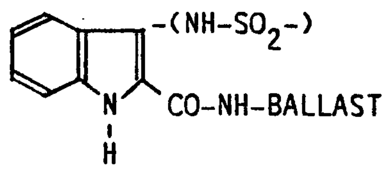

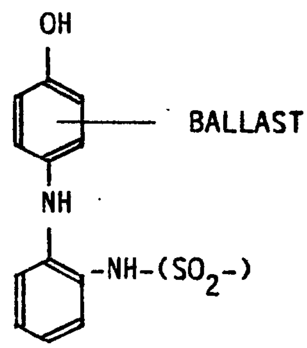

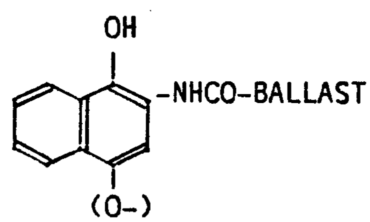

The groups within brackets are released together with the dye moiety (not represented), and remain as diffusion promoting groups with the dye moiety.

In the above mentioned dye-releasing compounds the dye release proceeds directly proportional to the rate of formation of the oxidation products of developing agent used in the development of silver halide. Said compounds are therefore negative working in that they undergo dye release in the exposed portions of a negative working silver halide emulsion layer. For the production of positive pictures an image reversal is needed which may be based on the use of positive-working layers containing a direct-positive silver halide emulsion or on the silver salt complex diffusion transfer process by selecting an appropriate layer assembly as described, e.g., in EP-A 0,003,376.

(CAR-G'-) moieties wherefrom in alkaline medium a dye moiety can be set free after reduction may be selected from the following groups or from these groups in further substituted and/or annulated form :

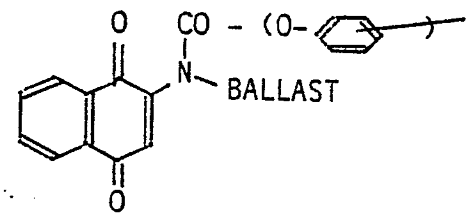

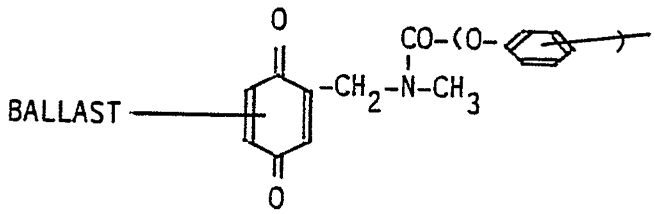

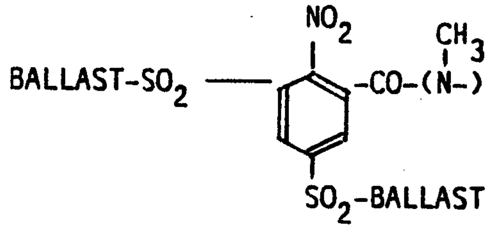

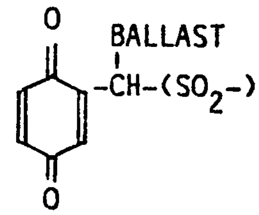

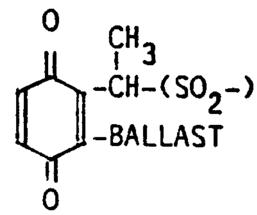

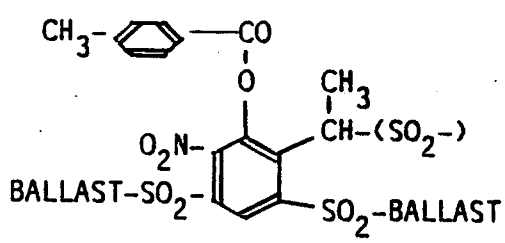

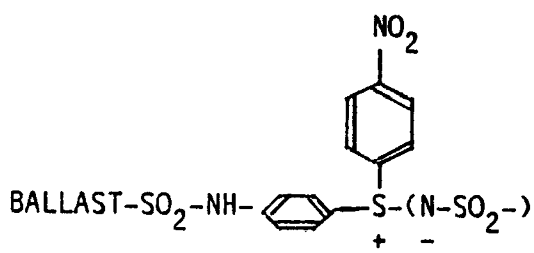

The groups within brackets are functional groups that are split off together with the dye moiety (not shown). These functional groups can be attached to the chromophoric group of the dye by a linking member as defined above by $-(A_1)_q-(B)_r-(A_2)_s-$that may have an influence on the stability of the dye. The functional group, optionally together with said linking member, is of importance for the diffusion-mobility and/or capability of the released dye to be mordanted.

Examples of carriers that are capable of releasing a diffusible dye or precursor thereof by argentolysis are described e.g. in the already mentioned Angew. Chem. Int. Ed. Engl. 22 (1983), p. 207. Particularly useful examples thereof are the following :

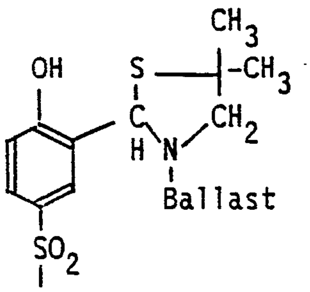

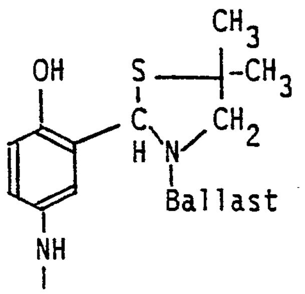

Ballast residues (BALLAST) that confer diffusion resistance are residues which allow the compounds according to the invention to be incorporated in a non-diffusing form in the hydrophilic colloids normally used in photographic materials. Organic residues, which generally carry straight-or branched-chain aliphatic groups and also isocyclic or heterocyclic or aromatic groups mostly having from 8 to 20 carbon atoms are preferred for this purpose. These residues are attached to the remainder of the molecule either directly or indirectly, e.g. through one of the following groups : -NHCO-; $-NHSO_2-$; -NR-, in which R represents hydrogen or alkyl; -O-; -S-; or $-SO_2-$. The residue which confers diffusion resistance may in addition carry groups which confer solubility in water, e.g. sulpho groups or carboxyl groups, and these may also be present in anionic form. Since the diffusion properties depend on the molecular size of the compound as a whole, it is sufficient in some cases, e.g., if the entire molecule is large enough, to use one or more shorter-chain groups as groups conferring resistance to diffusion.

The present invention also provides a process for the production of diffusion transfer colour images comprising the steps :

(1) applying an alkaline aqueous processing liquid to an image-wise exposed photosensitive element that contains in operative association with at least one alkali-permeable silver halide hydrophilic colloid emulsion layer at least one said cyan azo-thiazole compound wherefrom a cyan dye can be released by a redox reaction involving a silver halide developing agent or a reaction product stemming from a reaction with said developing agent,

(2) providing a silver halide developing agent which is present in said photosensitive element at least during application of said alkaline aqueous processing liquid to effect image-wise release of said cyan dye as a function of development of said silver halide emulsion layer and said redox-reaction, and

(3) allowing diffusion of said released cyan dye into an image-receiving layer that is arranged in water-permeable relationship with said emulsion layer.

By "operative association" is meant that the release of said diffusible cyan dye from the dye-releasing compound can proceed in dependence on and in function of the development of the silver halide emulsion layer. The dye-releasing compound need not be present in the silver halide emulsion layer itself but may be contained in another layer that is in water-permeable relationship therewith.

According to a preferred embodiment for positive dye image production with negative-working silver halide emulsions the azo-thiazole dye group of the above defined general formula (I) forms part of quinone-type dye-releasing IHR-compounds, from which a diffusible dye moiety is released by reduction and hydrolysis.

The reaction operative in the release of a dye moiety from said quinone-type IHR-compounds proceeds in two stages as illustrated by the following reaction mechanism:

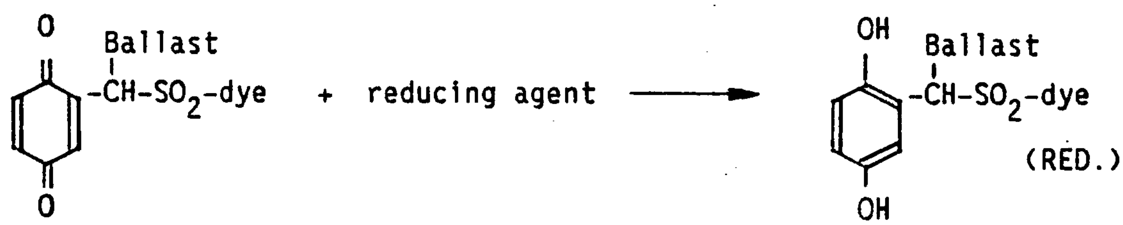


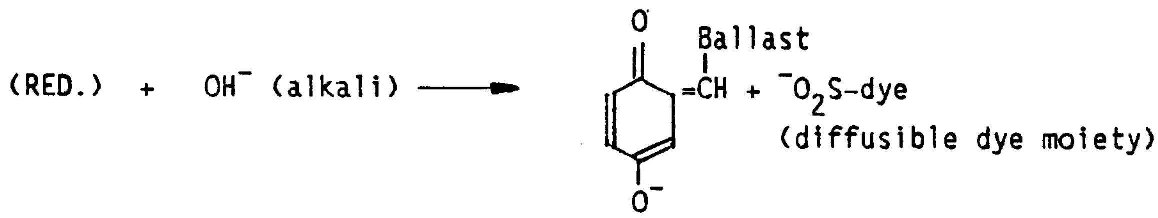


wherein :

"Ballast" stands for a ballasting group making the compound non-diffusing in a hydrophilic colloid medium under wet alkaline conditions.

The term "diffusible" as used herein stands for "having the property of diffusing effectively through colloid layers of the photosensitive elements in alkaline liquid medium". The term "mobile" has the same meaning. The term "non-diffusing" has the opposite meaning.

Examples of cyan dye compounds for use in the synthesis of cyan dye releasing compounds according to the present invention are listed in the following Tables 1 to 4.

TABLE 1

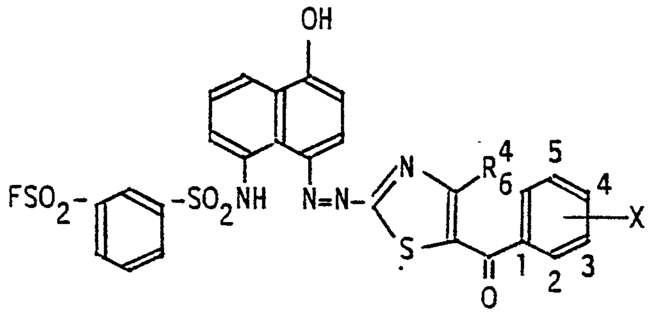

| Compound | $R^4$ | X |
|---|---|---|
| 1 | H | H |
| 2 | H | 4-Cl |
| 3 | H | $4-NO_2$ |
| 4 | H | $4-OCH_3$ |
| 5 | H | $4-CH_3$ |
| 6 | H | $4-S-CH_3$ |
| 7 | H | $4-SO_2CH_3$ |
| 8 | H | 4-F |
| 9 | H | 3-Cl |
| 10 | H | 3-F |

| | | |
|---|---|---|
| 11 | $C_6H_5$ | H |
| 12 | H | 4-CN |
| 13 | H | 2,3,4-trichloro |
| 14 | H | 2,5-dichloro |
| 15 | H | 2,4-dichloro |
| 16 | H | 3,4-dichloro |

TABLE 2

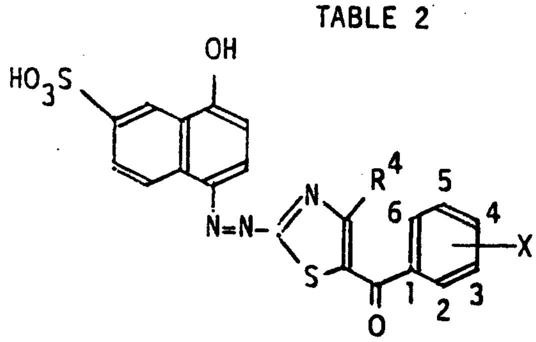

| Compound | X | $R^4$ |
|---|---|---|
| 17 | H | H |
| 18 | 4-Cl | H |
| 19 | $4\text{-}NO_2$ | H |
| 20 | $4\text{-}OCH_3$ | H |
| 21 | $4\text{-}CH_3$ | H |
| 22 | $4\text{-}S\text{-}CH_3$ | H |
| 23 | $4\text{-}SO_2CH_3$ | H |
| 24 | 4-F | H |
| 25 | 3-Cl | H |

| | | |
|---|---|---|
| 26 | 3-F | H |
| 27 | H | $C_6H_5$ |
| 28 | H | 4-CN |
| 29 | H | 2,3,4-trichloro |
| 30 | H | 2,5-dichloro |
| 31 | H | 2,4-dichloro |
| 32 | H | 3,4-dichloro |

TABLE 3

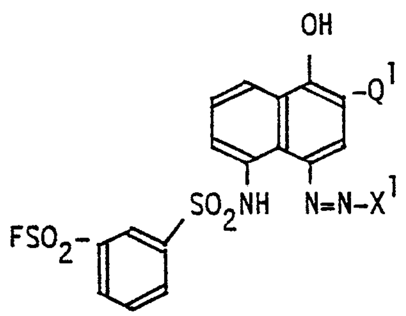

| Compound | $Q^1$ | $X^1$ |
|---|---|---|
| 33 | H | 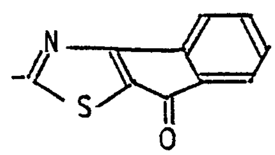 |
| 34 | H | 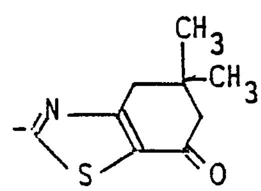 |
| 35 | $-SO_2NHtButyl$ | id. |
| 36 | H | 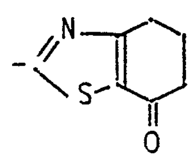 |

| | | |
|---|---|---|
| 37 | H | 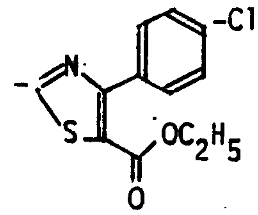 |
| 38 | H | 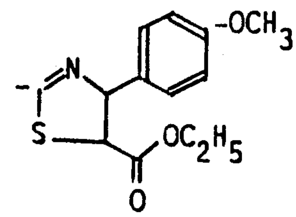 |
| 39 | H | 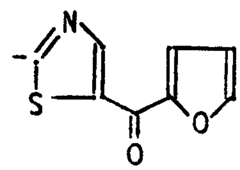 |
| 40 | H | 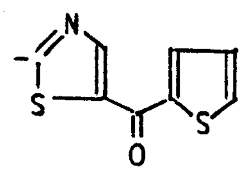 |
| 41 | H | 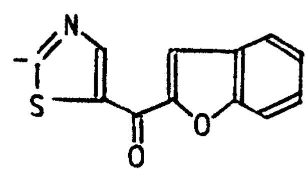 |

TABLE 4

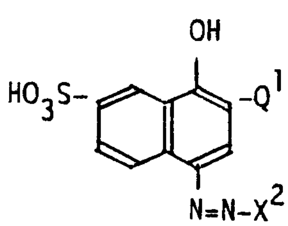

| Compound | $Q^1$ | $X^2$ |
|---|---|---|
| 42 | H | 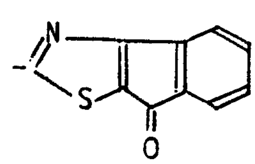 |

| | | |
|---|---|---|
| 43 | H | 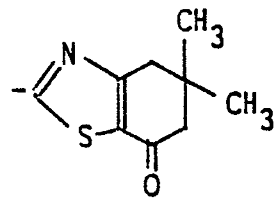 |
| 44 | H | 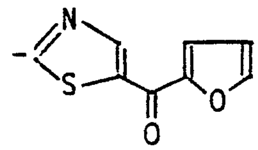 |
| 45 | H | 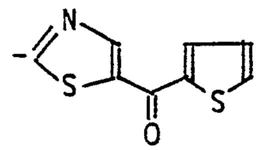 |
| 46 | H | 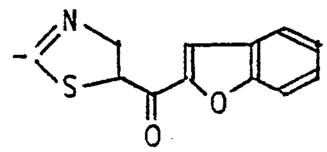 |

The synthesis of acylated thiazole compounds suited for use as intermediates in the preparation of cyan dye releasing compounds according to the present invention is illustrated by the reaction - schemes I and II wherein a benzoyl group exemplifies the acyl group $-\underset{\underset{O}{\|}}{C}-R^3$ of the general formula - (I).

Reaction scheme I

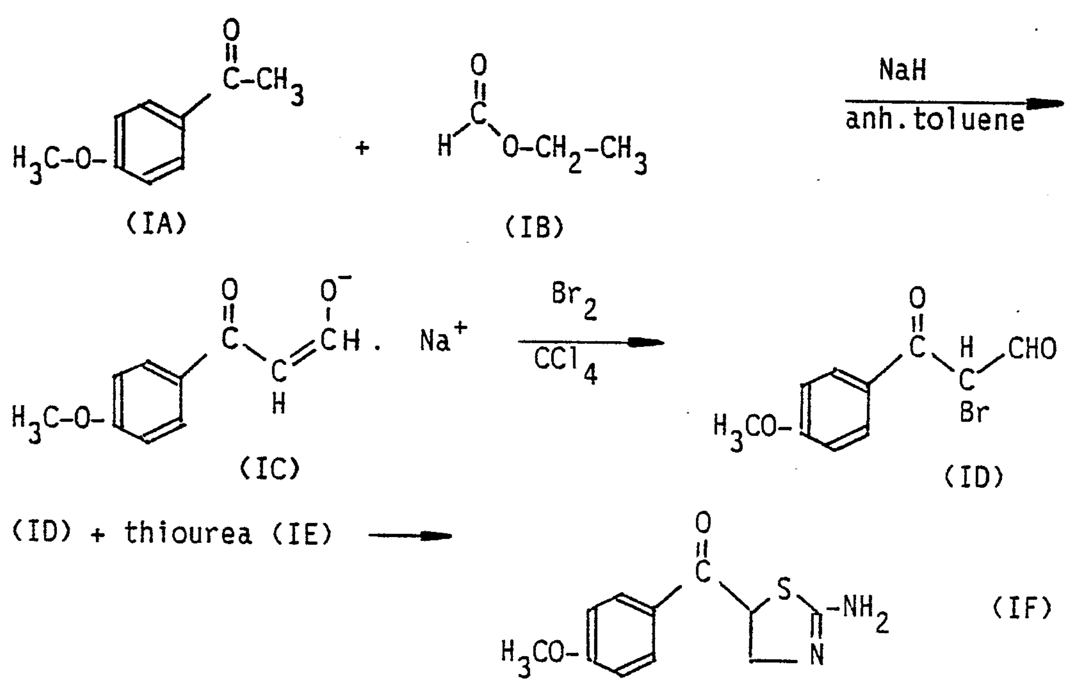


(IA) (IB) (IC) (ID) (IF)

Reaction scheme II

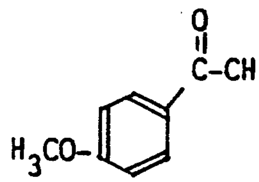

(IA)

+ $(CH_3O)_2CHN(CH_3)_2$

(IIB)

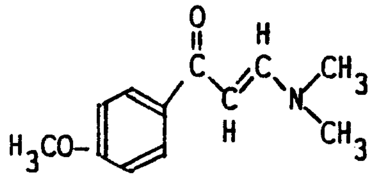

(IIC)

$Br_2$

acetic acid

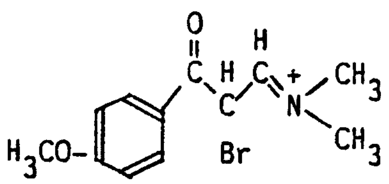

. $Br^-$

(IID)

(IID) + thiourea

(IE)

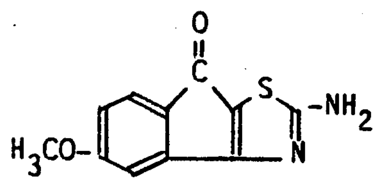

(IF)

Synthesis of 2-amino-5-p-methoxybenzoyl-thiazole according to reaction scheme I.

I.a. Preparation of compound (IC).

To a 55 % by weight dispersion of 23 g (0.55 mole) of NaH in 700 ml of anhydrous toluene were added dropwise 75 g (0.5 mole) of compound (IA) in 40 g (0.53 mole) of ethyl formate (compound IB).

The reaction mixture was stirred for about 1 h and after a certain induction period the reaction temperature suddenly rose from 20°C to about 50°C. Thereupon stirring was continued for about 15 minutes.

The completion of the reaction was checked by thin layer chromatography.

The precipitate formed in the reaction mixture was separated by suction filtering and washed with toluene. Yield after drying at 50°C : 86 g.

I.b. Preparation of compound (ID).

86 g of compound (IC) were stirred at 0 to 5°C in 150 ml of carbon tetrachloride. 16 g (0.1 mole) of bromine dissolved in 20 ml of carbon tetrachloride were added dropwise (exothermic reaction). After decoloration the reaction mixture was stirred for still 15 minutes. The sodium bromide formed in the reaction was removed by filtering and the filtrate was used as such.

I.c. Preparation of compound (IF).

To the filtrate containing compound (ID) 7.6 g - (0.1 mole) of thiourea was added and the reaction mixture was boiled with reflux till completion of the reaction. After cooling to room temperature the formed precipitate was separated by filtering and washed with water to neutral. After drying the crude product was recrystallized from acetonitrile. Melting point : 202°C.

Synthesis of 2-amino-5-p-methoxybenzoylthiazole according to reaction scheme II.

II.a Preparation of compound (IIC)

15 g (0.1 mole) of compound (IA) and 12 g (0.1 mole) of compound (IIB) were mixed and heated on an oil bath of 110°C. Stirring and boiling with reflux were continued for 18 h.

The reaction mass was concentrated by evaporation under vacuum with rotary evaporator and recrystallized from cyclohexane. Yield : 55 %. Melting point : 94°C.

II.b. Preparation of compound (IID).

To a solution of 2.05 g of compound (IIC) in 30 ml of acetic acid were dropwise added at room temperature 0.5 ml (0.01 mole) of bromine. Following the dissolution of the reagents a precipitate was formed. After 30 minutes of stirring thin layer chromatography results confirmed the completion of the reaction. The reaction mixture was further used as such.

II.c. Preparation of compound (IF).

To the reaction mixture containing compound - (IID) 0.76 g of thiourea was added and the reaction mixture was boiled with reflux for 3 h. The reaction mixture was poured into ice water and made alkaline with ammonia. The precipitate was separated by suction filtering, washed with water till neutral and dried. Yield of compound (F) : 61 %. Melting point : 202°C.

The synthesis of ring-closed acyl derivatives of thiazole compounds suited for use as intermediates in the preparation of cyan dye releasing compounds according to the present invention is illustrated by the reaction schemes III and IV.

Reaction scheme III

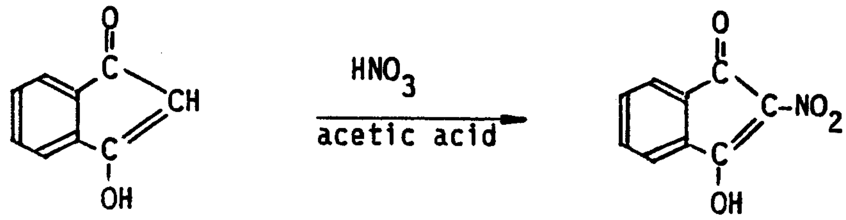


(IIIA) (IIIB)

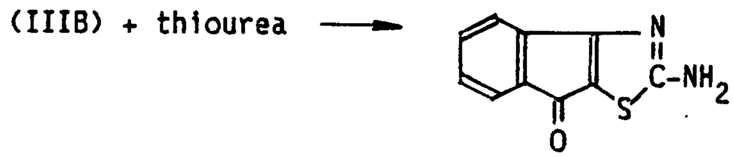


(IIIC)

Reaction scheme IV

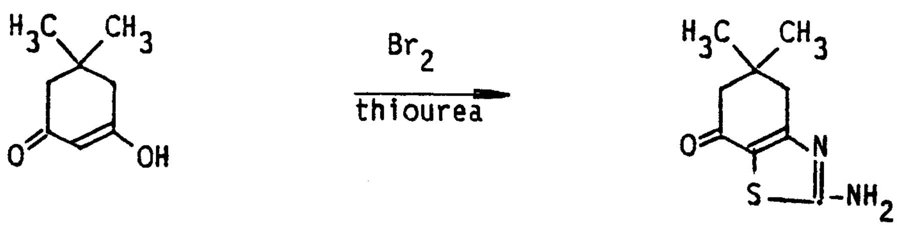


(IV A) (IV B)

The preparation of compound (IIIC) is described in detail in Khim.Seraorgan.Soedin., Soderzahashch.v Neft.i.Nefteprod., Akad.Nauk. SSSR, Bashkirsk.Filial 7, 65-6 (1964) and by E.Gudriniece and G.Vanags (Riga Polytech.Inst.) Nitro Compds., Proc.Intern.Symp., Warsaw 1963, 33-6 (Publ. 1964 in Russ.)

The preparation of compound (IV B) is described in US-P 3,161,632 using bromodimedone [ref.Ann. 322, 248 (1902)] as starting material.

The diazotization and azo coupling applied in the synthesis of cyan dye releasing compounds according to the present invention is illustrated by the following reaction scheme V.

Reaction scheme V

- diazotization :

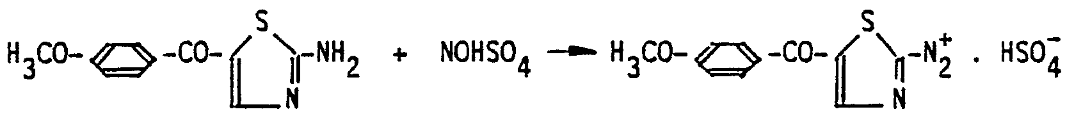

(IF) (VA) (VB)

- coupling to form azo dyes :

1) 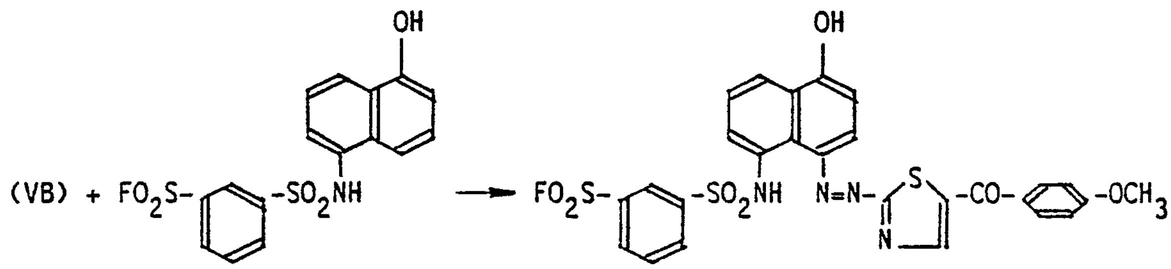

(VC) (VD)

2) 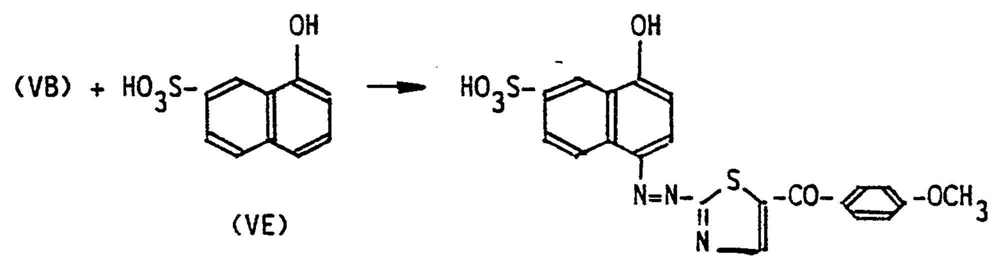

(VE) (VF)

3) 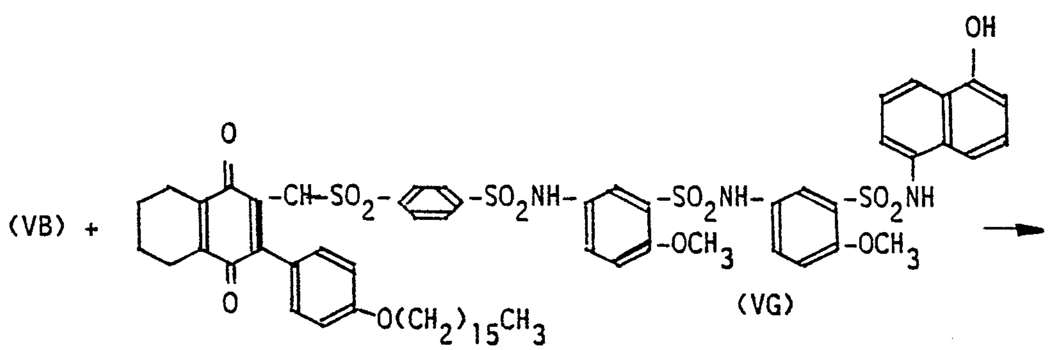

(VG)

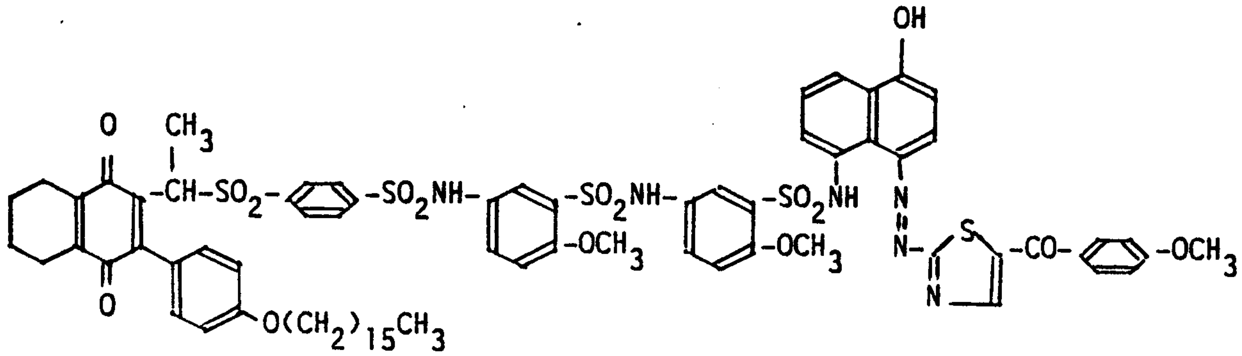

(VH) = compound 47 of Table 5 hereinafter

-Synthesis of compound (VB)

A mixture of 10 ml of acetic acid and 2 ml of propionic acid were cooled to 5°C. While stirring 2.23 ml of a 40 % by weight solution of nitrosyl sulphuric acid in sulphuric acid were added keeping the temperature at 5°C.

At that temperature to the obtained solution were added 2.34 g (0.01 mole) of the compound - (IF) and stirring was continued for 1 h at 5°C. The completion of the reaction was checked by thin layer chromatography.

-Synthesis of compound (VD)

In the temperature range of 5 to 8°C the obtained diazonium salt solution was added while stirring to a solution of 3.81 g (0.01 mole) of compound (VC) in 25 ml of ethylene glycol monomethyl ether. The reaction mixture was kept overnight and poured into 150 ml of water whereby the azo dye compound (VB) precipitated.

After washing with water and drying 6.25 g of azo dye (VB) were obtained.

-Synthesis of compound (VF)

The diazonium salt solution prepared as described above was added while stirring at 5 to 8°C to a solution of 2.24 g (0.01 mole) of 1-naphthol-7-sulphonic acid in 25 ml of ethylene glycol monomethyl ether. The reaction mixture was kept overnight and poured into 150 ml of acetone whereby the azo dye compound (IIIF) precipitated. After separation by suction filtering, washing with acetone and drying 4.7 g of azo dye (VF) were obtained.

-Synthesis of compound (VH)

The diazonium salt solution prepared as described above was added while stirring at 5 to 8°C to a solution of 12.37 g (0.01 mole) of compound - (IIIG) in 60 ml of methyl glycol acetate. The reaction mixture was kept stirring for 4 h at 5 to 10°C and then kept overnight at room temperature.

The azo dye compound (IIIH) was precipitated by pouring the reaction mixture into 500 ml of methanol. After stirring for 1 h the precipitate was separated by suction filtering and washed twice with methanol and dried. Yield : 13 g (88 %). Purification proceeded by preparative column chromatography using a 1/1 by volume mixture of dichloromethane and ethyl acetate.

Examples of dye releasing compounds having an $A_1$, B, and/or $A_2$ interlinking group are listed in Table 5. The introduction of such groups in dye releasing compounds is exemplified in European Patent Application No. 85201043.8.

TABLE 5

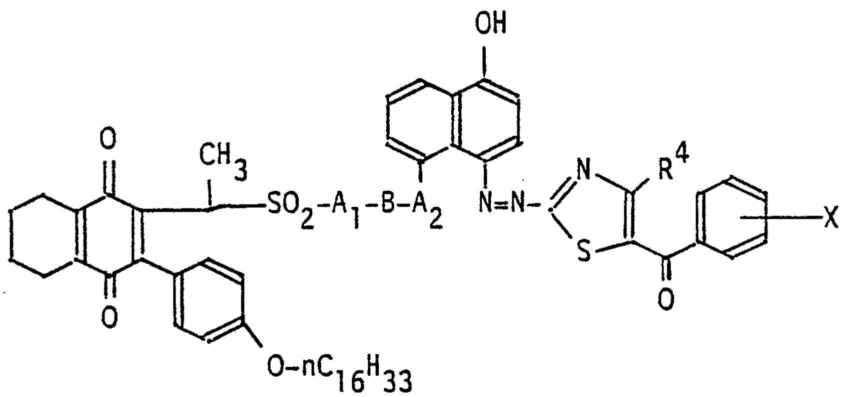

| Compound | $A_1$ | B | $A_2$ | $R^4$ | X |
|---|---|---|---|---|---|
| 47 | (a) | (b) | (b) | H | 4-$OCH_3$ |
| 48 | (e) | - | - | H | 4-$OCH_3$ |
| 49 | (a) | (b) | (b) | H | 4-$NO_2$ |
| 50 | (e) | - | - | H | 4-$NO_2$ |
| 51 | (a) | (d) | (d) | H | 4-$NO_2$ |
| 52 | (a) | (b) | (d) | H | 4-$NO_2$ |
| 53 | (e) | (d) | - | H | 4-$OCH_3$ |
| 54 | (e) | (c) | - | H | 4-$NO_2$ |

The compounds having the above general formula (I) are believed to be new compounds and the present invention includes such compounds per se.

For monochromic dye image production in accordance with the present invention a photosensitive silver halide emulsion element comprises a support carrying at least one alkali-permeable hydrophilic colloid silver halide emulsion layer having in operative association therewith at least one cyan dye-releasing compound corresponding to general formula (I).

According to an embodiment for the production of multicolour images the present invention provides a photosensitive element that comprises a support carrying (1) a red-sensitive silver halide emulsion layer having operatively associated therewith a dye-releasing compound that initially is non-diffusing in an alkali-permeable colloid medium and from which, inversely proportional to the development of the image-wise exposed silver halide by a silver halide developing agent in alkaline conditions and a redox-reaction, a cyan dye is split off in diffusible state, (2) a green-sensitive silver halide emulsion layer having operatively associated therewith a dye-releasing compound that initially is non-diffusing in an alkali-permeable colloid medium and from which, inversely proportional to the development of the image-wise exposed silver halide by a silver halide developing agent in alkaline conditions and a redox-reaction, a magenta dye is split off in diffusible state, and (3) a blue-sensitive silver halide emulsion layer having operatively associated therewith at least one dye-releasing compound corresponding to one of the above general formulae I and II, which initially is non-diffusing in an alkali-permeable colloid medium and from which, inversely proportional to the development of the image-wise exposed silver halide by a silver halide developing agent in alkaline conditions and a redox-reaction, a yellow dye is split off in diffusible state.

In the IHR mode the colour diffusion transfer process in accordance with the invention is carried out preferably in conjunction with a mixture of reducing agents, at least one of which is a compound called electron donor (ED-compound) and at least one of which is a compound called electron-transfer agent (ETA-compound).

The ED-compounds is preferably non-diffusing, e.g. it preferably carries a ballasting group, so that it remains in the layer, in which it has to transfer electrons to the quinone-type compound.

Preferably, the non-diffusing ED-compound is incorporated into each silver halide emulsion layer that contains a non-diffusing IHR-quinone-type compound. Examples of such ED-compounds are ascorbyl palmitate and 2,5-bis(1',1',3',3'-tetramethylbutyl)-hydroquinone. Other ED-compounds have been disclosed in US-P 4,139,379 and in published DE-A 2,947,425. Instead of an ED-compound an electron-donor precursor compound (EDP-compound) can be used in the photosensitive element as described e.g. in published DE-A 2,809,716 and in US-P 4,278,750. Particularly useful ED-precursor compounds for combination with IHR compounds corresponding to the above general formula (I) have been disclosed in EP-A 83.200.353.7 and in published DE-A 3,006,268, which in the latter case correspond to the following general formula :

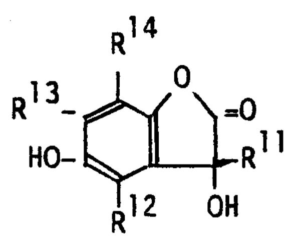

wherein :

$R^{11}$ represents a carbocyclic or heterocyclic aromatic ring, each of $R^{12}$, $R^{13}$, and $R^{14}$ (same or different) represents hydrogen, alkyl, alkenyl, aryl, alkoxy, alkylthio, amino, or $R^{13}$ and $R^{14}$ together represent an adjacent ring, e.g. carbocyclic ring, and

at least one of $R^{11}$, $R^{12}$, $R^{13}$, and $R^{14}$ represents a ballast group having from 10 to 22 carbon atoms.

The ETA-compound is preferably a developing agent, which is incorporated in mobile form, e.g. into (a) hydrophilic colloid layer(s) adjacent to one or more silver halide emulsion layers, or is applied as an ingredient of the processing liquid used for the dye diffusion transfer.

Typically useful ETA-compounds include hydroquinone compounds, aminophenol compounds, catechol compounds, phenylenediamine compounds, and 3-pyrazolidinone compounds e.g. 1-aryl-3-pyrazolidinone as described, e.g., in US-P 4,139,379.

A combination of different ETA-compounds such as those disclosed in US-P 3,039,869 can be employed. They can be contained in the liquid processing composition or can be contained at least partially in any layer or layers of the photosensitive element e.g. the silver halide emulsion layer(s), interlayer(s), or in the image-receiving layer. The selection of the specifically used ETA-compound(s) is, of course, determined by the particular electron donor and dye-releasing compound used in the process and the processing conditions for the particular photosensitive element.

The concentration of ED-compound or ED-precursor compound in the photosensitive material may vary within a broad range but is, e.g., in the molar range of 1:1 to 8:1 with respect to the dye-releasing compound. The ETA-compound may be present in the alkaline aqueous liquid used in the development step, but is used preferably in diffusible form in a non-sensitive hydrophilic colloid layer adjacent to the silver halide emulsion layer(s).

Migration of unoxidized developing agent, e.g. acting as ETA-compound, proceeds non-imagewise and has an adverse effect on colour rendition if excess unoxidized developing agent remains in the photoexposed areas of a negative-working emulsion layer. Therefore, according to a preferred embodiment of the present invention a silver halide solvent, e.g. thiosulphate, is used to mobilize unexposed silver halide in complexed form for helping to neutralize (i.e. oxidize by physical development) such excess unoxidized developing agent in the photoexposed areas where unaffected developing agent (ETA-compound) should no longer be available for entering into reaction with the dye-releasing compound directly or through the applied ED-compound. The use of silver halide solvents for that purpose has been described in the published EP-A 0049002.

For better colour rendition it is advantageous to intercept oxidized ETA-compound and prevent it from migrating to adjacent imaging layers where it could cause undesired oxidation of ED-compound. So-called scavengers can be used for such interception. They can be incorporated in non-diffusible state into the photosensitive element, e.g. in interlayers between the imaging layers. Suitable scavengers for that purpose have been described in e.g. US-P 4,205,987 and EP-A 0,029,546.

The dye-releasing compounds and optionally ED-or ED precursor compounds can be incorporated into the photosensitive element by addition thereof to the coating composition(s) of its layer(s) according to the usual methods known, e.g., for the incorporation of colour couplers into photosensitive silver halide emulsion elements.

The amount of dye-releasing compound coated per sq.m may vary within wide limits and depends on the maximum colour density desired.

The photosensitive element may contain (a) filter layer(s) to improve the correct spectral exposure of the differently spectrally sensitive silver halide emulsion layers, e.g. a yellow (colloidal silver) layer below the only blue-sensitive silver halide emulsion layer and a magenta filter layer below the green-sensitive silver halide emulsion layer for absorbing green light to which the underlying red-sensitized silver halide emulsion layer may be sensitive to some extent. A suitable magenta dye for that purpose is Violet Quindo RV 6911 -Colour index, C.I 46500 Pigment Violet 19.

The support of the photosensitive elements of this invention may be of any material as long as it does not deleteriously affect the photographic properties of the elements and is dimensionally stable. Typical flexible sheet materials for forming the support are paper, e.g. single-side or twin-side Alpha-olefin-polymer-coated paper such as polyethylene-coated paper and polypropylene-coated paper. Other flexible sheet support materials are e.g. cellulose nitrate film, cellulose acetate film, poly(vinyl acetal) film, polystyrene film, poly-(ethylene terephthalate) film, polycarbonate film, and related films or resinous materials. The support usually has a thickness of approximately 0.05 to 0.15 mm.

The image-receiving layer can form part of a separate image-receiving element or form an integral part of the photosensitive element.

When after the processing of the photosensitive element the image-receiving layer is to remain associated with the silver halide emulsion layer(s) of the photosensitive element, an alkali-permeable light-shielding layer, e.g. a layer containing white pigment particles is applied customarily between the image-receiving layer and the silver halide emulsion layer(s).

Any material can be employed as image-receiving layer in dye diffusion transfer photography, provided it performs the desired function of mordanting or otherwise fixing the diffused dye(s). The selection of the particular material to be used is, of course; determined by the nature of the dye(s) to be mordanted. If acid dyes are to be mordanted, the image-receiving layer can be composed of or contain basic polymeric mordants such as polymers of amino-guanidine derivatives of vinyl methyl ketone such as described in US-P 2,882,156 of Louis M.Minsk, issued April 14, 1959, and basic polymeric mordants and derivatives, e.g. poly-4-vinylpyridine, the metho-p-toluene sulphonate of 2-vinylpyridine and similar compounds described in US-P 2,484,430 of Robert H.Sprague and Leslie G.Brooker, issued October 11, 1949, and the compounds described in the published DE-A 2,200,063 filed January 11, 1971 by Agfa-Gevaert A.G. Suitable mordanting binders include, e.g., guanylhydrazone derivatives of acyl styrene polymers, as described, e.g., in published DE-A 2,009,498 filed February 28, 1970 by Agfa-Gevaert A.G. In general, however, other binders, e.g. gelatin, are added to the last-mentioned mordanting binders. Effective mordanting compositions are long-chain quaternary ammonium or phosphonium compounds or ternary sulphonium compounds, e.g. those described in

US-P 3,271,147 of Walter M.Bush and 3,271,148 of Keith E. Whitmore, both issued September 6, 1966, and cetyltrimethyl-ammonium bromide. Certain metal salts and their hydroxides that form sparingly soluble compounds with the acid dyes can also be used. The dye mordants are dispersed in one of the usual hydrophilic binders for the image-receiving layer, e.g. in gelatin, polyvinylpyrrolidone, or partly or completely hydrolysed cellulose esters.

Good results are obtained, e.g. when the image-receiving layer, which preferably is permeable to alkaline solution, is transparent and has a thickness of approximately 4 to 10 um. Of course, the thickness can be modified depending upon the results aimed at. The image-receiving layer can also contain other additives such as ultraviolet-absorbing substances to protect the mordanted dye images from fading, brightening agents e.g. stilbenes, coumarins, triazines, oxazols, or dye stabilizers such as the chromanols and alkyl-phenols.

Lowering of the pH-value in the dye-image-receiving element usually leads to increased stability of the transferred image. In general, the pH of the image layer can within a short time after imbibition be lowered from about 14 -13 to 11 but preferably to 7 -5. For instance, polymeric acids as disclosed in US-P 3,362,819 of Edwin H.Land, issued January 9, 1968, or solid acids or metal salts, e.g. zinc acetate, zinc sulphate, magnesium acetate, etc., as disclosed in US-P 2,584,030 of Edwin H.Land, issued January 29, 1952, can be employed successfully for that purpose. Such pH-lowering substances reduce the pH in the photographic element to terminate development and substantially reduce further dye transfer and thus stabilize the dye image.

The substances for lowering the pH can be coated with an inert timing or spacer layer that times or controls the pH-reduction proportionally to the rate, at which alkali diffuses through this inert spacer layer. Examples of such timing layers include gelatin, polyvinyl alcohol, or any of the colloids disclosed in US-P 3,455,686 of Leonard C.Farney, Howard G.Rogers and Richard W.Young, issued July 15, 1969. The timing layer can be effective in evening out the various reaction rates over a wide range of temperatures. For instance, premature pH-reduction is prevented, when imbibition is effected at temperatures above room temperature, e.g. at 35° to 37°C. The thickness of the timing layer is usually comprised between approximately 2.5 um and 18 um . Especially good results are obtained when the timing layer comprises a hydrolysable polymer or a mixture of such polymers, which are hydrolysed slowly by the processing liquid. Examples of such hydrolysable polymers are e.g. polyvinyl acetate, polyamides, or cellulose esters.

An alkaline aqueous processing liquid employed in the production of dye images according to the present invention may be a conventional aqueous solution of an alkaline substance e.g. sodium hydroxide, sodium carbonate or an amine such as diethylamine. Preferably this alkaline aqueous processing liquid has a pH above 11.

According to one embodiment the alkaline aqueous processing liquid contains the diffusible developing agent that effects the reduction of the silver halide, e.g. ascorbic acid or a 3-pyrazolidinone developing agent such as 1-phenyl-4-methyl-3-pyrazolidinone.

The alkaline aqueous processing liquid used in accordance with the process of the invention may also contain a desensitizing agent such as methylene blue, a nitro-substituted heterocyclic compound, or a 4,4'-bispyridinium salt, to ensure that the photosensitive element is not further exposed after its removal from the camera for processing.

For in-camera-processing the alkaline aqueous processing liquid preferably also contains a viscosity-increasing compound such as a high-molecular-weight polymer, e.g. a water-soluble ether inert to alkaline solutions such as hydroxyethylcellulose or alkali metal salts of carboxymethylcellulose e.g. sodium carboxymethylcellulose. A concentration of viscosity-increasing compound of approximately 1 to 5 % by weight of the alkaline aqueous processing liquid is preferred. It imparts a viscosity of about 100 mPa.s to about 200,000 mPa.s.

Although the common purpose in known dye-diffusion transfer systems is to produce dye images in a receiving layer or sheet by means of dye(s) released from the photosensitive element, a residual image of dye-releasing compound in the photosensitive element may be of practical interest for forming a so-called "retained image". This terminology is used, e.g. in Research Disclosure (No. 17362) of September 1978 and a dye-diffusion process relating thereto has been exemplified in Research Disclosure (No. 22711) of March 1983.

Processing can proceed in a tray developing unit as is contained, e.g., in an ordinary silver complex diffusion transfer (DTR) apparatus, in which contact between the image-wise exposed photosensitive element and a separate dye image-receiving element is effected after sufficient absorption of processing liquid by these elements has taken place. A suitable apparatus for this purpose is the COPYPROOF CP 42 (trade name) DTR-developing apparatus. COPYPROOF is a trade name of Agfa-Gevaert, Antwerp/Leverkusen.

In the case that the photosensitive layer(s) and the image-receiving layer are integrated in one single element, the alkaline aqueous processing liquid can be applied from at least one rupturable container which may itself form part of said element or by spraying.

Examples of rupturable containers that can be employed are those disclosed in US-P 2,543,181 of Edwin H.Land, issued February 27, 1951, 2,643,886 of Ulrich L. di Ghilini, issued June 30, 1953, 2,653,732 of Edwin H.Land, issued September 29, 1953, 2,723,051 of William J.McCune Jr., issued November 8, 1955, 3,056,492 and 3,056,491, both of John E.Campbell, issued October 2, 1962, and 3,152,515 of Edwin H.Land, issued October 13, 1964. In general, such containers comprise a rectangular sheet of fluid-and air-impervious material folded longitudinally upon itself to form two walls that are sealed to one another along their longitudinal and end margins to form a cavity in which processing liquid is contained.

The following examples illustrates the present invention. The amounts given are per square metre.

EXAMPLES

Preparation of the receptor element

The following composition was applied to a corona-treated polyethylene-coated paper support:

1) gelatin 2.5g

polymeric mordanting agent prepared from 4,4'-diphenyl-methane diisocyanate and N-ethyldiethanolamine quaternized with epichlorohydrin as described in Example 1 of published German Patent Application (DE-OS) 2,631,521 2.5g

2) protective gelatin layer 0.8g

Preparation of photosensitive elements

A strip of subbed polyethylene terephthalate support having a thickness of 0.1 mm was coated with the following layers in the given order:

1) a silver halide emulsion layer containing:

gelatine 2.1 g/sq.m

AgCl expressed as $AgNO_3$ 0.5 g/sq.m

cyan dye-releasing compound 47 of Table 5 0.371 g/sq.m (0.25 mmole/sq.m)

2,5-bis(1',1'-dimethyl-4'-hexyloxycarbonyl-butyl)-hydroquinone 0.200g/sq.m

2) protective layer containing:

gelatin 3.3 g/sq.m

1-phenyl-4-methyl-pyrazolidin-3-one 0.12 g/sq.m

citric acid up to a pH of 4.5 in both layers 0.06 g/sq.m

A number of identical strips of photosensitive element were made, except that each of them contained instead of the above-mentioned compound 47 an equal molar concentration of another cyan dye-releasing compound as listed in Table 6 hereinafter.

The strips were exposed image-wise and together with a receptor element as described above fed through a COPYPROOF (registered trade name of Agfa-Gevaert N.V. Belgium) CP 42 diffusion transfer processing apparatus containing in its tray an aqueous alkaline processing liquid comprising per litre:

sodium hydroxide 25 g

sodium orthophosphate 25 g

cyclohexane dimethanol 80 g

sodium bromide 2 g

sodium thiosulphate 2 g

water to make 1 litre.

The photosensitive elements were stripped from the receptor elements and the densities measured with a MACBETH (trade name) RD 19 densitometer (see Table 6). Absorption maxima - (Lambda max) expressed in nm were measured with a MATCHSCAN (trade name) apparatus.

TABLE 6

| Dye-releasing compound | % side absorption in the blue region | Lambda max |
|---|---|---|
| 47 | 18 % | 629 |
| 48 | 17.3 % | 626 |
| 49 | 18.3 % | 638 |
| IHR-compound A | 18.7 % | 642 |

Structure of IHR-compound A

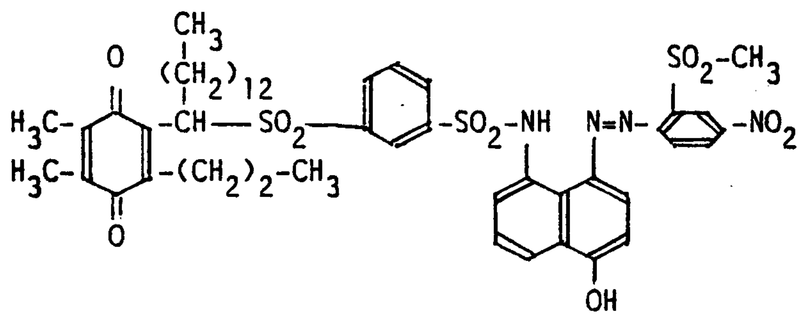

IHR-Compound A was prepared in analogy to procedures described in the published European Patent Application 0004399.

A second set of strips was prepared in exactly the same manner as described but prior to exposure and processing these were exposed to 57°C and 35 % relative humidity, for 72 hours. Subsequent to the photoexposure, the processing of said set of strips was carried out as before. Minimum density measurements are given in Table 7.

TABLE 7

| Dye releasing compound | $D_{min}$ |
|---|---|
| 47 | 0.30 |
| 48 | 0.49 |
| 49 | 0.20 |
| 50 | 0.17 |
| IHR-compound A | 0.55 |

## Claims

1. A photosensitive element incorporating in operative association with at least one alkali-permeable silver halide hydrophilic colloid emulsion layer at least one redox-controlled dye-releasing compound in ballasted non-diffusing state that can split off image-wise a diffusible cyan azo-thiazole dye as a function of development of said silver halide emulsion layer and of a redox reaction characterized in that said dye-releasing compound corresponds to the following general formula (I):

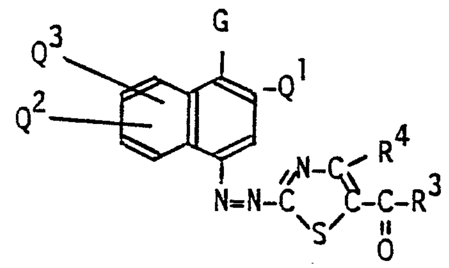

(I)

wherein :

$Q^1$ represents hydrogen, halogen, -COOH, or $-SO_3H$ or a salt of either of these acid groups, or is $-SO_2NR^1R^2$, $-SO_2R^1$, $-COR^1$, $-COOR^1$ or $-CONR^1R^2$, wherein each of $R^1$ and $R^2$ (which if present together may be the same or different) represents hydrogen, an alkyl group, a substituted alkyl group, an aryl group, a substituted aryl group or a heterocyclic group or $R^1$ and $R^2$ together represent the necessary atoms to complete a carbocyclic or heterocyclic ring,

$Q^2$ is positioned at the 5-or 8-position with respect to G and is -OH, $-NHCOR^1$, $-NHSO_2R^1$, $-NHCONR^1R^2$ or $-NHSO_2NR^1R^2$, wherein each of $R^1$ and $R^2$ (the same or different) have the meanings listed for the same symbols in the definition of $Q^1$,

G represents -OH, -O-acyl, $-NHSO_2R^1$ or $-NR^1R^2$, wherein $R^1$ and $R^2$ have the meanings listed for the same symbols in the definition of $Q^1$ or G and $Q^3$ together represent the necessary atoms to form a naphthsultam ring (so that $-Q^3$-G-represents $-SO_2$ NH-in case $Q^2$ is positioned at the 5-position),

$Q^3$ represents hydrogen, $-SO_3H$, $-SO_2R^1$ or $-SO_2NR^1R^2$, wherein $R^1$ and $R^2$ have the meanings listed for the same symbols in the definition of $Q^1$,

$R^3$ represents hydrogen, $-NR^1R^2$, $-OR^2$, an alkyl group, a substituted alkyl group, an aryl group, e.g. phenyl, a substituted aryl group, e.g. substituted phenyl or a heterocyclic group or $R^3$ and $R^4$ together represent the necessary atoms to complete a carbocyclic or heterocyclic ring,

$R^4$ represents hydrogen, an alkyl group, a substituted alkyl group, an aryl group, e.g. phenyl, a substituted aryl group, e.g. substituted phenyl or a heterocyclic group,

with the proviso that: at least one of the groups $R^3$, $R^4$, $Q^1$, $Q^2$ and $Q^3$ contains a redox cleavable CAR-$G^1$-group, wherein CAR-is a carrier group containing a ballast group thereby rendering the redox controlled dye releasing compound resistant to diffusion in a hydrophilic colloid medium under wet alkaline conditions and $G^1$-represents a group which releases together with the dye moiety in the redox controlled cleavage reaction.

2. A photosensitive element according to claim 1, wherein there is at least one said redox cleavable CAR-$G^1$-group wherein $G^1$ represents a group which is linked to the dye moiety and corresponds to the formula:

$-(A_1)_q-(B)_r-(A_2)_s-$

wherein :

each of q, r and s is 1 or zero with the proviso that not more than two of them are zero;

each of $A_1$ and $A_2$ (the same or different) is a single bond or a bivalent atom (e.g. -O-, -S-) or a bivalent atom group, e.g. $-SO_2-$, -CO-, $-CONR^4-$, $-SO_2NR^4-$, $-NR^4CO-$, $-NR^4SO_2-$, $-NR^4-$, a -phenylene-group, a $-NR^4CO$-phenylene-group, a $-NR^4SO_2$-phenylene-group, a -phenylene-$CO-NR^4$-group, or a -phenylene-$SO_2-NR^4$-group, the term "phenylene" used in these expressions representing phenylene with or without further substitution and $R^4$ having the meanings listed for the same symbol as it appears in formula (I), and

B represents a single bond, an unsubstituted or substituted alkylene group or an unsubstituted or substituted arylene group.

3. A photosensitive element according to claim 2, wherein $A_1$, $A_2$ and B are selected from the following groups :

(a) 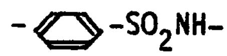

(b) 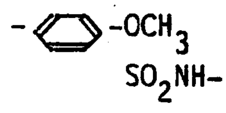

(c) 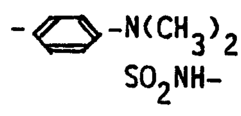

(d) 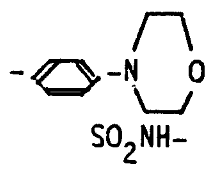

(e) 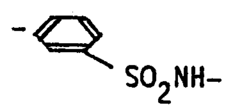

4. A photosensitive element according to any of the preceding claims, wherein said dye releasing compound is a reducible quinone-type IHR-compound.

5. A photosensitive element according to any of the preceding claims, wherein the acyl group -CO-$R^3$ is a benzoyl group or a substituted benzoyl group.

6. A process for the production of diffusion transfer colour images comprising the steps:

(1) applying an alkaline aqueous processing liquid to an image-wise exposed photosensitive element that contains in operative association with at least one alkali-permeable silver halide hydrophilic colloid emulsion layer at least one said cyan azo-thiazole compound wherefrom a cyan dye can be released by a redox reaction involving a silver halide developing agent or a reaction product stemming from a reaction with said developing agent,

(2) providing a silver halide developing agent which is present in said photosensitive element at least during application of said alkaline aqueous processing liquid to effect image-wise release of said cyan dye as a function of development of said silver halide emulsion layer and said redox-reaction, and

(3) allowing diffusion of said released cyan dye into an image-receiving layer that is arranged in water-permeable relationship with said emulsion layer, characterized in that said dye-releasing compound corresponds to a definition given thereof in any of the claims 1 to 5.

7. A cyan dye releasing compound having the general formula (I) and as defined in any of the claims 1 to 5.

European Patent Office

# EUROPEAN SEARCH REPORT

Application number

EP 85 20 1519

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 150 319 (AGFA-GEVAERT)<br>--- | | G 03 C 5/54<br>C 09 B 29/045 |
| A | EP-A-0 132 577 (AGFA-GEVAERT)<br>--- | | |
| A | DE-A-3 011 481 (KODAK)<br>----- | | |
| | | | **TECHNICAL FIELDS SEARCHED (Int. Cl.4)** |
| | | | G 03 C<br>C 09 B |

The present search report has been drawn up for all claims

| Place of search | Date of completion of the search | Examiner |
|---|---|---|
| THE HAGUE | 27-05-1986 | AMAND J.R.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82